# EUROPÄISCHE PATENTSCHRIFT

(11) **EP 0 836 175 B1**
(45) Veröffentlichungstag und Bekanntmachung des Hinweises auf die Patenterteilung: **05.02.2003**
(21) Anmeldenummer: 97202866.6
(22) Anmeldetag: 18.09.1997
(51) Int. Cl.: G10L 15/08, G10L 15/18

(54) **Verfahren und Anordnung zum Ableiten wenigstens einer Folge von Wörtern aus einem Sprachsignal**
Method and apparatus for the derivation of at least one sequence of words from a speech signal
Procédé et arrangement pour déduire au moins une suite de mots d'un signal vocal

(30) Priorität: 27.09.1996 DE 19639844
(43) Veröffentlichungstag der Anmeldung: 15.04.1998
(73) Patentinhaber: Philips Corporate Intellectual Property GmbH, 20099 Hamburg (DE); Koninklijke Philips Electronics N.V., 5621 BA Eindhoven (NL)
(72) Erfinder: Tran, Bach Hiep, 22335 Hamburg (DE); Seide, Frank, 22335 Hamburg (DE); Steinbiss, Volker, Dr., 22335 Hamburg (DE)
(74) Vertreter: Volmer, Georg, Dipl.-Ing.

(56) Entgegenhaltungen:
- EP-A- 0 614 172
- US-A- 5 241 619
- TRAN B -H ET AL: "A word graph based N-best search in continuous speech recognition" PROCEEDINGS ICSLP 96. FOURTH INTERNATIONAL CONFERENCE ON SPOKEN LANGUAGE PROCESSING (CAT. NO.96TH8206), PHILADELPHIA, PA, USA, Bd. 4, 3. - 6. Oktober 1996, Seiten 2127-2130, XP002080308 ISBN 0-7803-3555-4, IEEE, New York, NY, USA, 1996
- SCHWARTZ R ET AL: "A COMPARISON OF SEVERAL APPROXIMATE ALGORITHMS FOR FINDING MULTIPLE (N-BEST) SENTENCE HYPOTHESES" ICASSP-91: INTERNATIONAL CONFERENCE ON ACOSTICS, SPEECH AND SIGNAL PROCESSING, TORONTO, ONTARIO, CANADA, Bd. 1, 14. - 17. Mai 1991, Seiten 701-704, XP000245325 INSTITUTE OF ELECTRICAL AND ELECTRONICS ENGINEERS

## Beschreibung

Die Erfindung betrifft ein Verfahren zum Ableiten wenigstens einer Folge von Wörtern aus einem Sprachsignal, das eine in natürlicher Sprache gesprochene Äußerung darstellt, wobei also die einzelnen Wörter der Äußerung nicht notwendigerweise getrennt mit Sprachpausen dazwischen gesprochen werden. Es ist lediglich ein Vokabular vorgegeben, so daß nur Wörter aus diesem Vokabular abgeleitet werden können. Die abgeleitete Folge von Wörtern soll der tatsächlich gesprochenen Folge von Wörtern genau entsprechen. Derartige Verfahren werden daher auch als Spracherkennungsverfahren bezeichnet. Die Erfindung betrifft ferner auch eine Anordnung zum Ableiten wenigstens einer Folge von Wörtern.

Bei einem derartigen, aus der EP 614 172 A2 (PHD 93-034) bekannten Verfahren werden durch Vergleich mit Referenzsignalen einzelne Wörter abgeleitet und zu einem Wortgraphen zusammengesetzt. Da bei den Vergleichen praktisch nie eine vollständige Übereinstimmung mit den Referenzwerten auftritt, werden gleichzeitig bzw. zeitlich überlappend mehrere ähnlich klingende Wörter abgeleitet, denen je nach Grad der Übereinstimmung mit Referenzwerten unterschiedliche Bewertungswerte zugeordnet werden. Die Folge von aneinanderschließenden Wörtern, bei der sich die kleinste Summe der Bewertungswerte ergibt, wird als am wahrscheinlichsten gesprochene Wortfolge ausgegeben.

Es kommt jedoch häufig vor, daß aufgrund einer nicht optimalen Aussprache die ausgegebene Folge nicht genau die tatsächlich gesprochene Wortfolge ist, sondern letztere ist in dem Wortgraphen mit einer ungünstigeren Summe von Bewertungswerten enthalten. Um eine solche tatsächlich gesprochene Wortfolge doch ausgeben zu können, ist es grundsätzlich bekannt, aus einem Sprachsignal mehrere Wortfolgen abzuleiten, bei denen die Wahrscheinlichkeit der Übereinstimmung mit dem Sprachsignal schrittweise geringer ist. Aus diesen mehreren Wortfolgen kann dann z.B. eine Bedienungsperson die tatsächlich gesprochene Wortfolge auswählen. Eine weitere Anwendung für die Ausgabe verschiedener Wortfolgen mit abnehmender Wahrscheinlichkeit der Übereinstimmung mit dem Sprachsignal sind Dialogsysteme, bei denen die ausgegebene Wortfolge für eine automatische Datenbankanfrage verwendet wird. Dabei können die als am wahrscheinlichsten erkannten Wortfolgen zu nicht sinnvollen oder nicht auswertbaren Datenbankanfragen rühren, während erst eine Wortfolge mit geringerer Wahrscheinlichkeit zu einer brauchbaren Datenbankanfrage führt, so daß davon ausgegangen werden kann, daß eine solche Wortfolge dem tatsächlich gesprochenen Satz am besten entspricht.

Die Erzeugung mehrerer Wortfolgen unterschiedlicher Wahrscheinlichkeit der Übereinstimmung mit dem Sprachsignal ist jedoch allgemein sehr rechenaufwendig. In den Procedings ICASSP-91, Seiten 701 bis 704, Toronto, 1991 ist ein Verfahren zum Auffinden mehrfacher Satzhypothesen beschrieben, bei dem die Maßnahmen, die ein Zurückverfolgen der mehreren Satzhypothesen ermöglichen, aufwendig sind.

Aufgabe der Erfindung ist es, ein Verfahren auf der Basis von Wortgraphen sowie eine entsprechende Anordnung anzugeben, das mit wenig Aufwand die Erzeugung einer Vielzahl verschiedener Wortfolgen mit abnehmender Wahrscheinlichkeit der Übereinstimmung mit der gesprochenen Äußerung, die dabei zu zunehmend größeren Summen von Bewertungswerten führt, ermöglicht.

Diese Aufgabe wird gemäß der vorliegenden Erfindung im wesentlichen dadurch gelöst, daß von der Wortfolge mit der besten akustischen Übereinstimmung mit dem Sprachsignal ausgegangen wird. Der Erfindung liegt der Gedanke zugrunde, daß die Wortfolgen mit abnehmend geringer akustischer Übereinstimmung mit dem Sprachsignal Teile dieser akustisch ähnlicheren Wortfolgen enthalten müssen. Daher wird von dieser Wortfolge, die nachfolgend auch als erste Wortfolge bezeichnet wird, ausgegangen. Diese erste Wortfolge wird gesondert gespeichert in Form eines Baumes, der zunächst jedoch nur einen Zweig aufweist und eine Anzahl Knoten enthält, die die Grenzen zwischen den einzelnen Wörtern darstellen. Jeder Knoten in diesen Baum entspricht einem Knoten im Wortgraphen, der eine Vielzahl weiterer Knoten enthält. Um eine weitere Wortfolge mit nächstgrößerer Summe der Bewertungswerte zu finden, wird zu jedem Knoten im Baum der entsprechende Knoten im Wortgraphen aufgesucht und der optimale Teilpfad durch den Wortgraphen bis zum Anfang aufgesucht, d.h. der Teilpfad mit der kleinsten Bewertungssumme. Diese Summe wird um die Bewertungswerte der Worte im Rest des Baumes bis zum Endknoten erhöht, und der Teilpfad, der die kleinste so erhöhte Bewertungssumme aufweist, zusammen mit der restlichen Wortfolge im Baum ergibt die Wortfolge mit der nächstgrößeren Summe der Bewertungswerte. Der Baum wird dann um diese Teilfolge von Wörtern ergänzt, denn bei jeder weiteren zu ermittelnden Wortfolge müssen die bereits im Baum vorhandenen Zweige, genauer gesagt muß das letzte Wort der Teilfolge ausgeschlossen werden. Da der Baum nur relativ wenige Knoten gegenüber dem Wortgraphen aufweist, können auf diese Weise mit wenig Rechenaufwand weitere Wortfolgen ermittelt werden.

Es ist zweckmäßig, wenn bei der Berechnung der Summe von Bewertungswerten einer Wortfolge auf einem Pfad durch den Wortgraphen zusätzlich Sprachmodellwerte berücksichtigt werden, die die Wahrscheinlichkeit von Folgen von n ≥ 1 bestimmten Wörtern angeben. Für n = 1 sind dies Unigramm-Sprachmodellwerte, also die Wahrscheinlichkeit von einzelnen Wörtern als solche. Bessere Ergebnisse werden allerdings schon für n = 2 erzielt, also mit Sprachmodellwerten eines Bigramm-Sprachmodells. Auf diese Weise wird die Möglichkeit verringert, daß sinnlose Wortfolgen ausgegeben werden, auch wenn diese eine relativ große akustische Übereinstimmung mit dem Sprachsignal haben.

Der Rechenaufwand kann weiter auf folgende Weise verringert werden. Wenn nach der Ermittlung der ersten und jeder weiteren Wortfolge für jeden dann vorhandenen Baumknoten der optimale Teilpfad im Wortgraphen zum Anfang des Graphen gesucht und die zugehörige Bewertungssumme gebildet und um die Bewertungswerte der restlichen Wortfolge im Baum erhöht wird, wird diese erhöhte Bewertungssumme bei dem betreffenden Baumknoten gespeichert. Wenn dann eine weitere Wortfolge ermittelt worden ist, die aus einem Teilpfad und dem Rest der Wortfolge im Baum besteht, werden die einzelnen Kanten dieses neuen Teilpfades im Wortgraphen markiert, damit dieser Teilpfad bei der Ermittlung einer weiteren Wortfolge nicht mehr berücksichtigt wird. Die bei allen anderen Baumknoten gespeicherten Werte bleiben unverändert und brauchen für die Ermittlung der nächsten Wortfolge nicht neu berechnet zu werden. Anstatt die Knoten des Teilpfades zu markieren, kann auch für den betreffenden Baumknoten von den dann übrig bleibenden Teilpfaden im Wortgraphen der beste Teilpfad ermittelt und der entsprechende Bewertungswert beim Baumknoten gespeichert werden, so daß die nächste Wortfolge sich unmittelbar aus der kleinsten bei allen Baumknoten gespeicherten Bewertungssumme ergibt.

Eine weitere Erhöhung der Wahrscheinlichkeit, daß sich unter mehrerer so ermittelten Wortfolgen die tatsächlich gesprochene Wortfolge befindet, besteht darin, daß diese Wortfolgen nach deren Ermittlung mit einem komplexeren Sprachmodell zusätzlich bewertet werden. Dies ergibt neue Bewertungswerte für die einzelnen Wortfolgen, so daß sich die Rangfolge der Wortfolgen möglicherweise verändert, d.h. die zweitbeste Wortfolge kann z.B. nach der zusätzlichen Bewertung die viertbeste Wortfolge sein, während die vor der zusätzlichen Bewertung drittbeste Wortfolge dann z.B. die zweitbeste Wortfolge werden kann. In dieser veränderten Rangfolge können dann die Wortfolgen ausgegeben und ggf. weiterverarbeitet werden.

Ein Ausführungsbeispiel der Erfindung wird nachfolgend anhand der Zeichnung näher Erläutert. Es zeigen
Figur 1 einen Teil eines beispielhaften Wortgraphen,
Figur 2 einen Baum nach der Ermittlung der besten Wortfolge,
Figur 3 die Erweiterung des Baums nach der Ermittlung von vier Wortfolgen,
Figur 4 ein schematisches Blockschaltbild einer erfindungsgemäßen Anordnung.

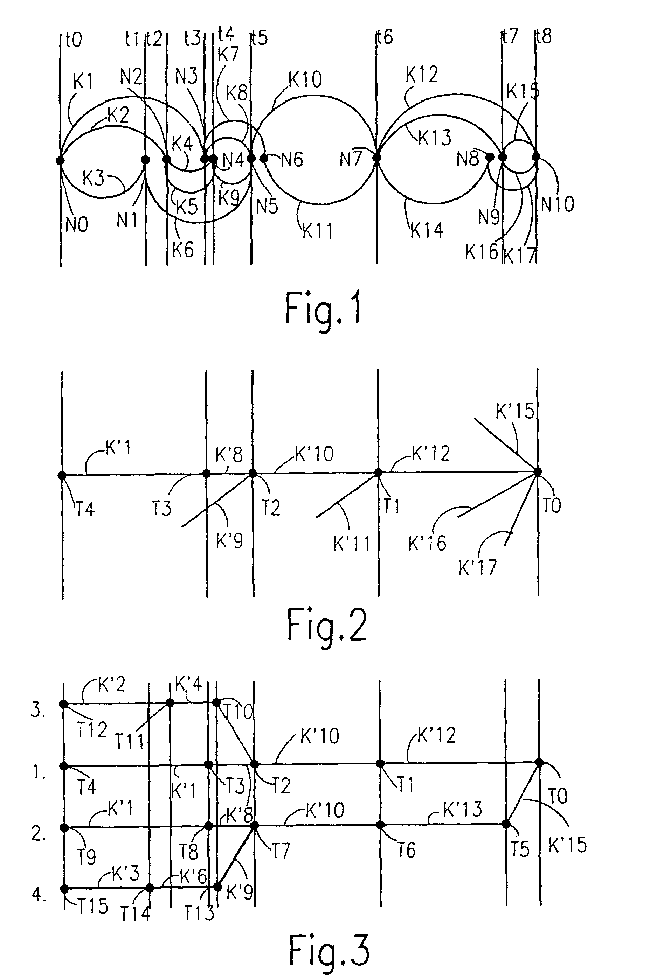

Der in Figur 1 dargestellte Wortgraph enthält eine Anzahl Knoten N0 bis N10, die hier der Übersichtlichkeit halber in einer Reihe dargestellt sind. Diese Knoten N0 bis N10 stellen Wortgrenzen zwischen Wörtern dar, die hier durch die Kanten K1 bis K17 angedeutet sind, und die Wortgrenzen treten zu verschiedenen Zeitpunkten t0 bis t8 auf. dieser Graph wird dadurch erzeugt, daß das Sprachsignal mit Referenzsignalen verglichen wird, wobei unterschiedliche Folgen von Referenzsignalen verschiedenen Wörtern zugeordnet sind. Wenn ein Wort eine ausreichende Ähnlichkeit mit einem Abschnitt des Sprachsignals aufweist, wird dieses Wort dem Wortgraphen zugefügt. In der Praxis hat eine solcher Wortgraph noch eine Anzahl weiterer Knoten mit aufeinanderfolgenden anderen Wörtern, die hier der Übersichtlichkeit halber jedoch nicht dargestellt sind, sondern es sind nur die Knoten dargestellt, denen Knoten des in figur 3 dargestellten Baumes entsprechen.

Der Knoten N0 stellt den Anfang des Sprachsignals dar, beispielsweise die Aufforderung eines Systems an einen Benutzer, mit dem Sprechen zu beginnen. Beim Knoten N0 beginnt zunächst Schweigen, da der Benutzer nicht sofort zu sprechen beginnt.

Da ein Sprachsignal häufig von Rauschen oder Hintergrundgeräuschen überlagert ist, wird zum Zeitpunkt t1 in einer Hypothese das Schweigen, das hier durch die Kante K3 angedeutet ist, in dem Knoten N1 als beendet und der Beginn eines durch die Kante K6 beginnenden Wortes erkannt. In einer weiteren Hypothese wird das Schweigen, das durch die Kante K2 angedeutet ist, zum Zeitpunkt t2 mit dem Knoten N2 als beendet und der Anfang von zwei möglichen Wörtern, angedeutet durch die Kanten K4 und K5, erkannt. Abhängig von der Ähnlichkeit der einzelnen Wörter mit dem Sprachsignal in dem betreffenden Abschnitt werden diesen einzelnen Wörtern Bewertungswerte zugeordnet, die in der Figur 1 jedoch nicht angegeben sind. In einer dritten Hypothese schließlich wird das Schweigen, das durch die Kante K1 angedeutet ist, erst zum Zeitpunkt t3 im Knoten N3 als beendet und der Anfang von zwei möglichen Wörtern, angedeutet durch die Knoten K7 und K8, erkannt. In dieser Weise wird der ganze in Figur 1 dargestellte Wortgraph gebildet.

Wenn das Ende des Sprachsignals mit dem Knoten N10 erreicht ist, wobei ein möglicherweise folgendes Schweigen nicht dargestellt ist, werden alle möglichen Pfade durch den Wortgraphen, und zwar auch Pfade durch die in Figur 1 nicht dargestellten, jedoch tatsächlich vorhandenen Knoten und Kanten verfolgt, und die den Wörtern längs dieser Pfade zugeordneten Bewertungserte werden aufsummiert. Dabei werden zweckmäßig außerdem Sprachmodellwerte berücksichtigt, insbesondere Sprachmodellwerte eines Bigramm-Sprachmodells. Damit wird die Wahrscheinlichkeit herabgesetzt, daß Wortfolgen, die in einem normalen Satz praktisch nicht vorkommen, als mögliche Wortfolge ausgegeben werden, wenn sie eine gute akustische Ähnlichkeit mit dem Sprachsignal bzw. dem entsprechenden Abschnitt des Sprachsignals aufweisen. Alle möglichen Pfade enden schließlich im Knoten N10, und derjenige Pfad, der die beste Summe der Bewertungswerte aufweist, wird als erste Wortfolge ausgegeben.

Gleichzeitig wird diese erste Wortfolge gesondert als Baum gespeichert, wie in Figur 2 angedeutet ist, wobei dieser Baum zunächst nur aus einem einzigen Zweig besteht. Dieser Baum enthält die Wörter K'1, K'8, K'10 und K'12, die im Wortgraphen in Figur 1 den Kanten K1, K8, K10 und K12 entsprechen. An den Wortgrenzen zwischen den Wörtern liegen die Knoten T0 bis T4, die hier vom Endknoten T0 her nummeriert sind und die den Knoten N10, N7, N5 und N3 im Wortgraphen in Figur 1 entsprechen. Außerdem ist in Figur 2 angegeben, wie mögliche Kandidaten für die zweitbeste Wortfolge gefunden werden können, die also eine größere Summe der Bewertungswerte als die beste Wortfolge ergibt, jedoch kleiner als die aller anderen möglichen Wortfolgen im Wortgraphen. Die zweitbeste Wortfolge kann nur eine Teilfolge enthalten, die auf jeden Fall in einem der Knoten des Baumes münden muß. Für den Knoten T2 kann dies in diesem Beispiel nur eine Teilfolge sein, die mit dem Wort K'9 entsprechend der Kante K9 im Wortgraphen endet. Für den Knoten T1 ist nur eine Wortfolge möglich, die mit dem Wort K'11 endet, denn im Wortgraphen laufen nur die beiden Kanten K10 und K11 auf den Knoten N7 zu. Die Kante K10 ist jedoch bereits durch die beste Wortfolge verbraucht. Lediglich für den Endknoten, der auch einen möglichen Knoten für die zweitbeste Wortfolge bildet, sind drei verschiedene Wortfolgen möglich, die mit den Wörtern K'15, K'16 und K'17 enden. Welche von allen möglichen Wortfolgen tatsächlich die zweitbeste Wortfolge ist, wird dadurch festgestellt, daß über jede der möglichen Teilfolgen die Summe der Bewertungswerte der darauf liegenden Wörter gebildet werden und diese Summe um die Bewertungswerte der restlichen Wörter auf dem bereits vorhandenen Baum erhöht wird. Sofern bei einem Knoten im Baum mehrere mögliche Teilfolgen für die zweitbeste Wortfolge enden können, kann von solchen mehreren möglichen Teilfolgen nur die Teilfolge mit der kleinsten Summe der Bewertungswerte ein möglicher Kandidat für die zweitbeste Wortfolge sein. An jedem Baumknoten, d.h. in diesem Beispiel an den Baumknoten T2, T1 und T0 wird die betreffende erhöhte Summe der Bewertungswerte gespeichert. In einem weiteren Schritt werden diese gespeicherten Werte verglichen, und der kleinste Wert gibt an, bei welchem Knoten die zweitbeste Wortfolge in die beste Wortfolge einmündet.

In Figur 3 ist nun ein Beispiel für die vier besten Wortfolgen angegeben. Die Rangfolge ist durch die Zahlen am linken Ende der einzelnen Zweige angedeutet. Die beste Wortfolge enthält, wie bereits in Figur 2 angegeben, die Wörter K'1, K'8, K'10 und K'12. Die zweitbeste Wortfolge mündet hier erst beim Endknoten T0 in die beste Wortfolge und enthält die Wörter K'1, K'8, K'10, K'13 und K'15. Diese Wortfolge enthält nun zusätzlich die Knoten T5 bis T9. Die drittbeste Wortfolge mündet beim Knoten T2 in die beste Wortfolge und umfaßt die Wörter K'2, K'4, K'9, K'10 und K'12. Dies ergibt die zusätzlichen Knoten T10 bis T12. Die viertbeste Wortfolge mündet bei diesem Beispiel in den Knoten T7 der zweitbesten Wortfolge und enthält die Wörter K'3, K'6, K'9, K'10, K'13 und K'15.

Es sei bemerkt, daß hier das den Kanten K1, K2 und K3 zugeordnete Schweigen formal auch als Wort bezeichnet ist, da bei der Anwendung dieses Verfahrens das Schweigen ebenfalls formal als Wort behandelt wird, um zu einer möglichst einfachen Verarbeitung zu kommen.

Es wird ferner darauf hingewiesen, daß beispielsweise das Wort K'10 entsprechend der Kante K10 im Wortgraphen sowohl in der besten als auch in der zweitbesten Wortfolge auftritt. Da diese beiden Wortfolgen erst im Endknoten T0 zusammenlaufen, sind für die nächstbesten Wortfolgen nur solche ausgeschlossen, die als letztes Wort das Wort K'12 enthalten, d.h. es werden alle Teilfolgen im Wortgraphen blockiert, die die Kante K12 enthalten.

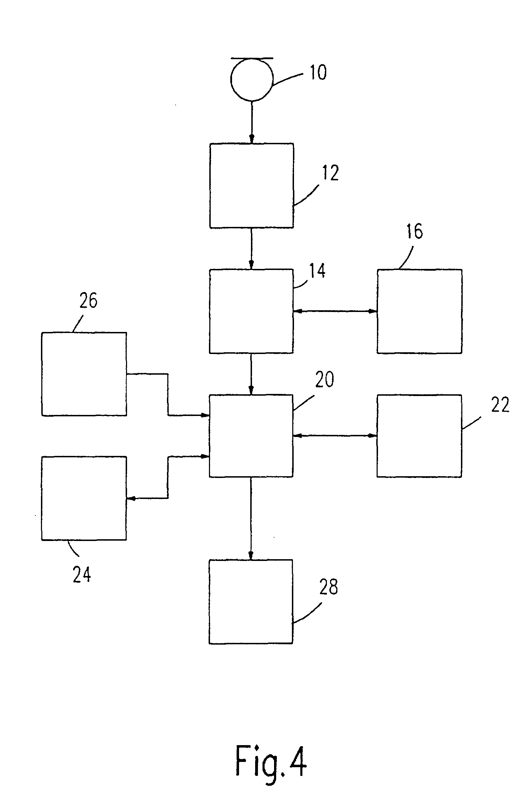

Ein Beispiel für eine Anordnung zur Ausführung des beschriebenen Verfahrens ist schematisch in Fig. 4 dargestellt. Darin wird ein von einem Mikrofon 10 aufgenommenes Sprachsignal in einer Anordnung 12 wiederholt abgetastet, und aus den Abtastungen werden Testsignale abgeleitet, die das abgetastete Sprachsignal charakterisieren. Diese Testsignale werden einer Erkennungsanordnung 14 zugeführt, wo die Testsignale mit einer Anzahl Referenzsignale aus einem Speicher 16 verglichen werden. Diese Referenzsignale bilden eine Anzahl Folgen, und jeder Folge ist ein Wort des Vokabulars zugeordnet. Die Erkennungsanordnung 14 führt also eine akustische Erkennung des Sprachsignals durch, wobei eine Vielzahl von Hypothesen gebildet werden, und es werden dabei ermittelte Wörter ausgegeben, die eine genügende Wahrscheinlichkeit aufweisen, daß sie dem Sprachsignal entsprechen. Ein Maß für diese Wahrscheinlichkeit ist in Bewertungswerten enthalten, die den Wörtern zugeordnet mit ausgegeben werden.

Die ausgegebenen Wörter bilden einen Wortgraphen mit Knoten und Kanten, wobei die Kanten den Wörtern entsprechen und die Knoten Zeitpunkten zugeordnet sind, an denen wenigstens ein Wort endet und wenigstens ein weiteres Wort beginnt. Durch diesen Wortgraphen sind verschiedene Pfade möglich, von denen diejenigen gesucht werden, bei denen die Summe der Bewertungswerte der Wörter auf diesem Pfad möglichst klein sind, und zuerst der Pfad mit der kleinsten Summe der Bewertungswerte von allen möglichen Pfaden.

Für die auf diesem Pfad ermittelte Wortkette ist zwar die akustische Wahrscheinlichkeit am größten, daß diese dem Sprachsignal entspricht, jedoch kann es sein, daß durch beispielsweise eine undeutliche Aussprache eine andere Wortkette mit einem etwas größeren-Bewertungswert tatsächlich das wiedergibt, was die das Sprachsignal abgebende Person sagen wollte. Durch Verwendung eines Sprachmodells beim Bestimmen der Wortfolgen im Graphen kann zwar die Wahrscheinlichkeit eines Fehlers verringert werden, jedoch nicht ganz ausgeschlossen werden. Solche Fehler sind beispielsweise bei Auskunftssystemen, bei denen ein Benutzer eine gesprochene Anfrage an das System stellt, aus dem ein Zugriff auf eine Datenbank abgeleitet werden muß, sehr lästig. Die Wortfolge mit dem besten Bewertungswert enthält dabei möglicherweise Inkonsistenzen oder Widersprüche oder führt zu einem nicht ausführbaren Datenbankzugriff, weil die entsprechenden Daten nicht in der Datenbank enthalten sind. Es ist daher zweckmäßig, aus einem gebildeten Wortgraphen mehrere Wortfolgen mit zunehmend ungünstigerem Bewertungswert abzuleiten, bis eine Wortfolge ermittelt ist, die bestimmte Bedingungen erfüllt.

Dies wird in einer Verarbeitungsanordnung 20 durchgeführt, der der Wortgraph zugeführt wird. Diese ermittelt zunächst den Pfad durch den Graphen, auf dem die Wörter die günstigste Bewertungssumme haben. Diese Wortkette wird in einem Speicher 24 abgespeichert. Für die Ermittlung einer folgenden Wortkette mit dem nächsten ungünstigeren Bewertungswert werden jetzt nur solche vom Anfang des Wortgraphen ausgehende Teilfolgen von Wörtern durch den Wortgraphen berücksichtigt, die wenigstens einen Teilknoten mit dem Pfad gemeinsam haben, auf dem die Wortfolge mit dem besten gesamten Bewertungswert lag. Dazu wird zweckmäßig von den Knoten auf diesem Pfad ausgegangen, und die darauf zulaufenden Teilfolgen werden rückwärts verfolgt. Dadurch erfordert die Ableitung jeder weiteren Wortfolge erheblich geringeren Rechenaufwand, als wenn für jede weitere Wortfolge der gesamte Wortgraph durchsucht werden muß.

Von jeder weiteren Wortfolge wird die Teilfolge im Speicher 24 gespeichert, die darin noch nicht enthalten ist. Auf diese Weise entsteht im Speicher 24 eine Baumstruktur von Wortfolgen, die zumindest den Endpunkt des Wortgraphen gemeinsam haben. Wenn eine Teilfolge von einem im Speicher 24 vorhandenen Knoten rückwärts verfolgt werden soll, werden solche Teilfolgen selbstverständlich ausgeschlossen, die bereits im Speicher 24 enthalten sind. Dafür genügt es, von jedem Knoten ausgehend jedes Wort auszuschließen. das bereits im Speicher 24 auf diesen Knoten hinlaufend vorhanden ist.

Bei der Ermittlung einer Wortfolge mit dem nächsten ungünstigeren Bewertungswert, wie auch bei der Ermittlung der Folge mit dem besten Bewertungswert wird allgemein ein Sprachmodell berücksichtigt, das in einem Speicher 26 gespeichert ist, der mit der Verarbeitungsanordnung 20 gekoppelt ist.

Aus den so ermittelten unterschiedlichen Wortfolgen wird beispielsweise eine Information für eine Datenbankanfrage an eine Datenbank 22 erzeugt. Dabei können die verschiedenen Wortfolgen zunächst ermittelt und dann nacheinander für eine Datenbankanfrage verwendet werden, oder es wird zunächst nur die optimale Wortfolge ermittelt und diese geprüft, ob damit eine widerspruchsfreie und mögliche Information für eine Datenbankanfrage erzeugt werden kann, und wenn dies nicht der Fall ist, wird erst dann die nächste Wortfolge mit ungünstigerem Bewertungswert gebildet.

Von der Verarbeitungsanordnung 20 kann schließlich die aus der Datenbankanfrage gewonnene Antwort an eine Ausgabeanordnung 28 ausgegeben werden. Wenn es sich jedoch nicht um ein Auskunftssystem handelt, sondern beispielsweise um ein Diktiersystem zum Umsetzen eines Sprachsignals in einen schriftlichen Text, werden die von der Verarbeitungsanordnung 20 ermittelten Wortfolgen direkt an die Ausgabeanordnung 28 abgegeben. Diese ist beispielsweise ein Bildschirm, wobei ein Benutzer prüft, ob der auf dem Bildschirm dargestellte Text dem Sprachsignal entspricht, und wenn dies nicht der Fall ist, wird beispielsweise über eine Tastatur ein Signal an die Verarbeitungsanordnung 20 gegeben, um die nächste Wortfolge zu ermitteln bzw. auszugeben.

## Patentansprüche

1. Verfahren zum Ableiten wenigstens einer Folge von Wörtern eines vorgegebenen Vokabulars aus einem Sprachsignal mit folgenden Schritten:
a) Aus dem Sprachsignal werden Testsignale abgeleitet,
b) die Testsignale werden mit Referenzsignalen verglichen, wobei unterschiedliche Folgen von Referenzsignalen verschiedenen Wörtern zugeordnet sind,
c) es werden durch die Vergleiche Wörter mit Bewertungswerten ermittelt und ein Wortgraph mit Knoten als Wortgrenzen und Wörter als Kanten daraus gebildet,
d) die Wörter auf einem ersten Pfad durch den Wortgraphen mit der kleinsten Summe von Bewertungswerten wird als Folge von Wörtern ausgegeben,
**gekennzeichnet durch** folgende weitere Schritte:
e) Zur Ausgabe von weiteren Folgen von Wörtern mit nächstgrößerer Summe von Bewertungswerten wird die Folge von Wörtern auf dem ersten Pfad als Grundlage für einen Baum mit Baumknoten an den Wortgrenzen und mit einem Endknoten gesondert gespeichert,
f) für jeden Baumknoten wird für den auf den entsprechenden Graphenknoten zulaufenden Teilpfad des Wortgraphen die Gesamtsumme der Bewertungswerte der vom Anfang des Wortgraphen an darauf liegenden Wörter gebildet, wobei die Teilpfade mit den bisher ermittelten Folgen von Wörtern ausgeschlossen werden,
g) die Folge von Wörtern, bei der die Summe der Bewertungswerte der Wörter auf einem Teilpfad im Wortgraphen bis zu dem einem Baumknoten entsprechenden Graphenknoten und im Baum von diesem Baumknoten bis zum Endknoten am kleinsten ist, wird ausgegeben und der bereits gespeicherte Baum um die Folge von Wörtern auf diesem Teilpfad ergänzt,
h) die Schritte f) und g) werden wiederholt durchgeführt.

2. Verfahren nach Anspruch 1, **dadurch gekennzeichnet, daß** bei jeder Summe von Bewertungswerten zusätzlich Sprachmodellwerte, die die Wahrscheinlichkeit von Folgen von n ≥ 1 bestimmten Wörtern angeben, berücksichtigt werden.

3. Verfahren nach anspruch 1 oder 2, **dadurch gekennzeichnet, daß** für jeden Baumknoten die Summe der Bewertungswerte der Wörter auf dem besten Teilpfad im Wortgraphen bis zu dem diesem Baumknoten entsprechenden Graphenknoten und im Baum von diesem Baumknoten bis zum Endknoten gespeichert wird, daß als weitere Folge die zur minimalen Summe der Bewertungswerte aller Knoten gehörenden Folge von Wörtern ausgegeben wird, daß die Baumknoten mit zugehörigen Summen von Bewertungswerten, die zu dem Teilpfad mit den ausgegebenen Wörtern gehört, markiert werden und daß zur Ermittlung der nächsten weiteren Folge nur für die markierten Baumknoten erneut die Summe der Bewertungswerte ermittelt und gespeichert wird.

4. Anordnung zum Ableiten wenigstens einer Folge von Wörtern eines vorgegebenen Vokabulars aus einem Sprachsignal, mit
einer Erkennungsanordnung zum Ableiten eines Wortgraphen mit Bewertungswerten, die durch Vergleich von aus dem Sprachsignal abgeleiteten Testsignalen mit Referenzsignalen ermittelt sind, aus dem Sprachsignal,
einer Verarbeitungsanordnung zum Ableiten mehrerer Folgen von Wörtern aus dem Wortgraphen durch Aufsummieren von Bewertungswerten über verschiedene Folgen von Wörtern in Wortgraphen und Ausgabe wenigstens einer Wortfolge mit minimaler Summe von Bewertungswerten,
einem Speicher, der mit der Verarbeitungsanordnung gekoppelt ist, zum Speichern jeder ausgegebenen Wortfolge in Form eines Baumes, wobei die Anordnung derart angeordnet ist, daß von jeder neu ausgegebenen Wortfolge nur die zu den bereits gespeicherten Wortfolgen unterschiedlichen Teile der neu ausgegebenen Wortfolge gespeichert werden und die Verarbeitungsanordnung nach der ersten ausgegebenen Wortfolge nur solche Wortfolgen aus dem Wortgraphen ableitet, die wenigstens eine Wortgrenze mit den bereits gespeicherten Wortfolgen gemeinsam haben, und von Beginn des Wortgraphen ausgehende Teilfolgen von Wörtern, von denen wenigstens das letzte Wort einer im Speicher gespeicherten Teilfolge entspricht, ausschließt.

## Claims

1. A method of deriving at least one sequence of words of a predetermined vocabulary from a speech signal, including the following steps:
a) deriving test signals from the speech signal,
b) comparing the test signals with reference signals, different words being associated with different sequences of reference signals,
c) determining words with scores by way of the comparisons and forming a word graph therefrom which contains nodes as word boundaries and words as edges,
d) outputting the words on a first path through the word graph with the smallest sum of scores as the sequence of words,
**characterized in that** it also includes the following steps:
e) separately storing, in order to output further sequences of words having a next-larger sum of scores, the sequence of words on the first path as a basis for a tree having tree nodes at the word boundaries and one end node,
f) forming, for each tree node for the path segment of the word graph which extends to the corresponding graph node, the overall sum of the scores of words which are situated thereon as from the start of the word graph, the path segments with the sequences of words determined thus far being excluded therefrom,
g) outputting the sequence of words for which the sum of the scores of the words on a path segment in the word graph as far as the graph node corresponding to a tree node, and from this tree node to the end node in the tree, is smallest, the already stored tree being extended by the sequence of words on this path segment,
h) repeatedly carrying out the steps f) and g).

2. A method as claimed in claim 1, **characterized in that** for each sum of scores additionally language model values which indicate the probability of sequences of n ≥ 1 given words are taken into account.

3. A method as claimed in claim 1 or 2, **characterized in that** for each tree node there is stored the sum of the scores of the words on the best path segment in the word graph until the graph node corresponding to this tree node and from this tree node to the end node in the tree, that the sequence of words associated with the minimum sum of the scores of all nodes is output as the further sequence, that the tree nodes with associated sums of scores, associated with the path segment with the words output, are marked, and that for the determination of the next further sequence the sum of the scores is determined and stored only for the marked tree nodes.

4. An arrangement for deriving at least one sequence of words of a predetermined vocabulary from a speech signal, including
a recognition arrangement for deriving a word graph with scores, determined by comparison of test signals derived from the speech signal with reference signals, from the speech signal, a processing arrangement for deriving a number of word sequences from the word graph by summing scores over a number of word sequences in the word graph, and for outputting at least one word sequence having a minimum sum of scores,
a memory which is coupled to the processing arrangement in order to store each output word sequence in the form of a tree, the arrangement being such that from each newly output word sequence there being stored only the parts which differ from the word sequences already stored, and the processing arrangement deriving from the word graph, after the first word sequence output, only those word sequences which have at least one word boundary in common with the already stored word sequences, and excluding subsequences of words which start from the beginning of the word graph and at least the last word of which corresponds to a sub-sequence stored in the memory.

## Revendications

1. Procédé pour déduire au moins une suite de mots d'un vocabulaire préalablement déterminé à partir d'un signal vocal comportant les étapes suivantes:
a) les signaux de test sont dérivés du signal de parole;
b) les signaux de test sont comparés à des signaux de référence, différentes suites de signaux de référence étant affectées à différents mots;
c) des mots avec des valeurs d'évaluation sont déterminés par les comparaisons et un graphique de mots avec des noeuds comme limites de mots et des mots comme bords est formé à partir de là;
d) les mots sont émis sur une première voie par le graphique de mots avec la somme minimale des valeurs d'évaluation comme une suite de mots,
**caractérisé par** les étapes supplémentaires suivantes:
e) pour la sortie de suites de mots supplémentaires avec la somme la plus élevée suivante de valeurs d'évaluation, la suite de mots est enregistrée séparément sur la première voie comme base pour une arborescence avec des noeuds d'arborescence aux limites des mots et avec un noeud final;
f) Pour chaque noeud de l'arborescence, la somme totale des valeurs d'évaluation des mots situés là dès le début du graphique de mots est formée pour la voie partielle du graphique de mots convergeant sur le noeud de graphique correspondant, les voies partielles étant exclues avec les suites de mots déterminées jusqu'à présent;
g) la suite de mots pour laquelle la somme des valeurs d'évaluation des mots sur une voie partielle dans le graphique partiel jusqu'au noeud de graphique correspondant à un noeud d'arborescence et, dans la structure arborescente, de ce noeud d'arborescence jusqu'au noeud final est la plus petite émise et la structure déjà enregistrée est complétée de la suite de mots sur cette voie partielle;
h) les étapes f) et g) sont effectuées à plusieurs reprises.

2. Procédé selon la revendication 1, **caractérisé en ce que** des valeurs de modèle de parole qui indiquent la probabilité de suites de n ≥ 1 mots déterminés sont prises en considération à chaque somme des valeurs d'évaluation.

3. Procédé selon l'une des revendications 1 ou 2, **caractérisé en ce que**, pour chaque noeud d'arborescence, est enregistrée la somme des valeurs d'évaluation des mots sur la meilleure voie partielle dans le graphique de mots jusqu'au noeud de graphique correspondant à ce noeud d'arborescence et, dans l'arborescence, de ce noeud d'arborescence jusqu'au noeud final, que la suite de mots appartenant à la somme minimale des valeurs d'évaluation de tous les noeuds est émise comme suite ultérieure, que les noeuds d'arborescence sont marqués avec les sommes correspondantes de valeurs d'évaluation qui appartiennent à la voie partielle avec les mots émis et que, pour la détermination de la suite ultérieure suivante, la somme des valeurs d'évaluation est déterminée et enregistrée uniquement pour les noeuds d'arborescence marqués.

4. Arrangement pour déduire au moins une suite de mots d'un vocabulaire préalablement déterminé à partir d'un signal vocal avec
un dispositif de reconnaissance pour déduire un graphique de mots avec des valeurs d'évaluation qui ont été déterminées par comparaison de signaux de test dérivés du signal de parole avec des signaux de référence à partir du signal de parole,
un dispositif de traitement pour déduire plusieurs suites de mots du graphique de mots par addition des valeurs d'évaluation sur différentes suites de mots dans le graphique de mots et sortir au moins une suite de mots avec une somme minimale des valeurs d'évaluation;
une mémoire qui est couplée au dispositif de traitement pour l'enregistrement de chaque suite de mots émise sous la forme d'une structure arborescente, l'arrangement étant disposé de telle sorte que seules les parties de la suite de mots nouvellement émise différentes des suites de mots déjà enregistrées sont enregistrées et le dispositif de traitement déduit uniquement du graphique de mots après la première suite de mots émise les suites de mots qui ont au moins une limite de mots avec les suites de mots déjà enregistrées et exclut les suites partielles de mots à partir du début du graphique de mots dont au moins le dernier mot correspond à une suite partielle enregistrée dans la mémoire.
